(19) Europäisches Patentamt
European Patent Office
Office européen des brevets

(11) Veröffentlichungsnummer: **0 036 551**
**B1**

(12) **EUROPÄISCHE PATENTSCHRIFT**

(45) Veröffentlichungstag der Patentschrift: **06.07.83**

(51) Int. Cl.³: **C 08 F 10/00**, C 08 F 4/64

(21) Anmeldenummer: **81101740.9**

(22) Anmeldetag: **10.03.81**

(54) **Verfahren zum Herstellen von Homo- und Copolymerisaten von alpha-Monoolefinen.**

(30) Priorität: **22.03.80 DE 3011236**

(43) Veröffentlichungstag der Anmeldung: **30.09.81 Patentblatt 81/39**

(45) Bekanntmachung des Hinweises auf die Patenterteilung: **06.07.83 Patentblatt 83/27**

(84) Benannte Vertragsstaaten: **AT BE DE FR GB IT NL**

(56) Entgegenhaltungen:
**EP-A-0 009 724**
**DE-A-2 052 525**
**DE-A-2 658 939**

(73) Patentinhaber: **BASF Aktiengesellschaft, Carl-Bosch-Strasse 38, D-6700 Ludwigshafen (DE)**

(72) Erfinder: **Staiger, Gerhard, Dr., Virchowstrasse 26, D-6712 Bobenheim-Roxheim 2 (DE)**

EP 0 036 551 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Verfahren zum Herstellen von Homo- und Copolymerisaten von $\alpha$-Monoolefinen

Die vorliegende Erfindung liegt im Rahmen eines Verfahrens zum Herstellen von Homo- und Copolymerisaten von $C_2$- bis $C_6$-$\alpha$-Monoolefinen bei Temperaturen von 20 bis 160, insbesondere 50 bis 120° C und Drücken von 1 bis 100, insbesondere 20 bis 70 bar mittels eines Ziegler-Natta-Katalysatorsystems aus

(1) einem Titanhalogenid der Formel

$TiCl_3 \cdot mAlCl_3$

worin m steht für eine Zahl von 0 bis 0,5, insbesondere 0,1 bis 0,4,

(2) einer Sauerstoffverbindung der Formel

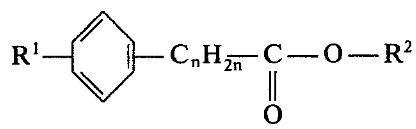

worin stehen

$R^1$ für Wasserstoff, eine $C_1$- bis $C_4$-Alkylgruppe oder eine $C_1$- bis $C_4$-Alkoxygruppe, vorzugsweise Wasserstoff oder eine $C_1$- bis $C_2$-Alkylgruppe, und insbesondere Wasserstoff,

$R^2$ für eine $C_1$- bis $C_4$-Alkylgruppe, insbesondere die Äthylgruppe, und

n für eine ganze Zahl von 0 bis 3, insbesondere die Zahl 1,

und

(3) einem Aluminiumalkyl der Formel

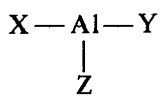

worin stehen

X sowie

Y für eine jeweils nicht mehr als 8, insbesondere nicht mehr als 2 Kohlenstoffatome aufweisende Alkylgruppe,

Z für Chlor oder eine nicht mehr als 8, insbesondere nicht mehr als 2 Kohlenstoffatome aufweisende Alkylgruppe,

mit den Maßgaben, daß (I) das Molverhältnis Titanhalogenid (1) : Sauerstoffverbindung (2) im Bereich von 1 : 1 bis 20 : 1, insbesondere 3 : 1 bis 6 : 1 liegt, (II) das Molverhältnis Titanhalogenid (1) : Aluminiumalkyl (3) 1 : 1 bis 1 : 20, insbesondere 1 : 2 bis 1 : 15 beträgt, sowie (III) das Titanhalogenid (1) und die Sauerstoffverbindung (2) vor ihrem Einsatz miteinander vermahlen worden sind.

Verfahren dieser Gattung sind bekannt; ihre Besonderheit gegenüber vergleichbaren anderen Verfahren liegt in der speziellen Ausgestaltung des Katalysatorsystems, wofür als typisches Beispiel die DE-OS 2 658 939 zitiert werden kann.

Die speziellen Ausgestaltungen des Katalysatorsystems werden vorgenommen, um bestimmte Ziele zu erreichen, z. B. die folgenden:

(a) Katalysatorsysteme, die bei der Polymerisation von $\alpha$-Monoolefinen, wie insbesondere Propylen, zu Polymerisaten mit einem hohen Anteil an stereoregulärem (= isotaktischem) Polymerisat führen.

(b) Katalysatorsysteme, die eine erhöhte Ausbeute an Polymerisat zu liefern vermögen, nämlich Systeme mit einer erhöhten Produktivität, d. h. Systeme, bei denen die Menge an gebildetem Polymerisat pro Gew.-Einheit des Katalysatorsystems erhöht ist.

(c) Katalysatorsysteme, durch die weniger Halogen in das Polymerisat eingebracht werden; — was zu erreichen ist, indem die Ausbeute gemäß (b) gesteigert wird und/oder ein Titanhalogenid eingesetzt wird, das möglichst wenig Halogen erhält.

(d) Katalysatorsysteme, deren Aktivitätsmaximum über eine möglichst lange Zeit konstant bzw. relativ konstant bleibt; — was für die Katalysatorausbeuten von erheblicher Bedeutung ist.

(e) Katalysatorsysteme, die es erlauben, durch Erhöhung der Polymerisationstemperatur eine Umsatzsteigerung zu bewirken ohne signifikante Minderung der Stereoregularität der Polymerisate; — ein Effekt, der generell erwünscht ist, insbesondere auch bei der Trockenphasenpolymerisation.

(f) Katalysatorsysteme, durch welche — insbesondere bei relativ hohen Polymerisationstemperaturen — die morphologischen Eigenschaften der Polymerisate in bestimmter Weise beeinflußt werden, etwa im Sinne einer einheitlichen Korngröße und/oder einer Verringerung der Feinstkornanteile und/oder eines hohen Schüttgewichts; — was z. B. für die technische Beherrschung der Polymerisationssysteme, die Aufarbeitung der Polymerisate und/oder die Verarbeitbarkeit der Polymerisate von Bedeutung sein kann.

(g) Katalysatorsysteme, die einfach und sicher herzustellen und gut handzuhaben sind; — z. B. solche, die sich in (inerten) Kohlenwasserstoff-Hilfsmedien zubereiten lassen.

(h) Katalysatorsysteme, die es ermöglichen, bei der Polymerisation unter Einwirkung eines Molekulargewichtsreglers, wie insbesondere Wasserstoff, mit relativ geringen Mengen an Regler auszukommen; — was z. B. für die Thermodynamik der Verfahrensführung von Bedeutung sein kann.

(i) Katalysatorsysteme, die auf spezielle Polymerisationsverfahren zugeschnitten sind; — etwa solche, die z. B. entweder auf die spezifischen Besonderheiten der Suspensionspolymerisation oder auf die spezifischen Besonderheiten der Trockenphasenpolymerisation abgestimmt sind.

(j) Katalysatorsysteme, die zu Polymerisaten führen, deren Eigenschaftsspektrum sie für das eine oder das andere Anwendungsgebiet besonders geeignet macht.

Nach den bisherigen Erfahrungen gibt es unter den mannigfachen Zielen etliche Ziele, die man durch spezielle Ausgestaltungen des Katalysatorsystems nur dann erreichen kann, wenn man andere Ziele zurücksetzt.

Unter diesen Gegebenheiten ist man im allgemeinen bestrebt, solche Ausgestaltungen zu finden, mit denen man nicht nur die gesteckten Ziele erreicht, sondern auch andere erwünschte Ziele möglichst wenig zurücksetzen muß.

In diesem Rahmen liegt die Aufgabenstellung der vorliegenden Erfindung: Eine neue Ausgestaltung eines Katalysatorsystems aufzuzeigen, mit der man gegenüber bekannten Ausgestaltungen — unter vergleichbarer Zielsetzung — bessere Ergebnisse erreichen kann.

Es wurde gefunden, daß die gestellte Aufgabe gelöst werden kann mit einem Katalysatorsystem der eingangs definierten Art, das als eine weitere Komponente (4) einen bestimmten phenolischen Stoff enthält.

Gegenstand der vorliegenden Erfindung ist mithin ein Verfahren zum Herstellen von Homo- und Copolymerisaten von $C_2$- bis $C_6$-$\alpha$-Monoolefinen bei Temperaturen von 20 bis 160, insbesondere 50 bis 120° C und Drücken von 1 bis 100, insbesondere 20 bis 70 bar mittels eines Ziegler-Natta-Katalysatorsystems aus

(1) einem Titanhalogenid der Formel

$$TiCl_3 \cdot mAlCl_3$$

worin m steht für eine Zahl von 0 bis 0,5, insbesondere 0,1 bis 0,4,

(2) einer Sauerstoffverbindung der Formel

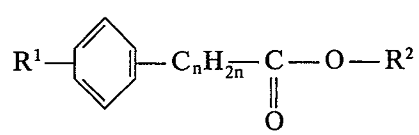

worin stehen

$R^1$ für Wasserstoff, eine $C_1$- bis $C_4$-Alkylgruppe oder eine $C_1$- bis $C_4$-Alkoxygruppe, vorzugsweise Wasserstoff oder eine $C_1$- bis $C_2$-Alkylgruppe, und insbesondere Wasserstoff,

$R^2$ für eine $C_1$- bis $C_4$-Alkylgruppe, insbesondere die Äthylgruppe, und

n für eine ganze Zahl von 0 bis 3, insbesondere die Zahl 1,

und

(3) einem Aluminiumalkyl der Formel

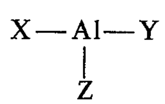

worin stehen

X sowie

Y für eine jeweils nicht mehr als 8, insbesondere nicht mehr als 2 Kohlenstoffatome aufweisende Alkylgruppe,

Z für Chlor oder eine nicht mehr als 8, insbesondere nicht mehr als 2 Kohlenstoffatome aufweisende Alkylgruppe,

mit den Maßgaben, daß (I) das Molverhältnis Titanhalogenid (1) : Sauerstoffverbindung (2) im Bereich von 1 : 1 bis 20 : 1, insbesondere 3 : 1 bis 6 : 1 liegt, (II) das Molverhältnis Titanhalogenid (1) : Aluminiumalkyl (3) 1 : 1 bis 1 : 20, insbesondere 1 : 2 bis 1 : 15 beträgt, sowie (III) das Titanhalogenid (1) und die Sauerstoffverbindung (2) vor ihrem Einsatz miteinander vermahlen worden sind. Das erfindungsgemäße Verfahren ist dadurch gekennzeichnet, daß man ein Katalysatorsystem einsetzt, daß als eine weitere Komponente enthält

(4) einen phenolischen Stoff der Formel

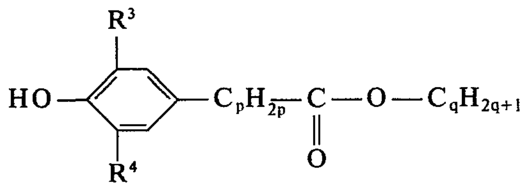

worin stehen
$R^3$ für eine $C_1$- bis $C_6$-, insbesondere $C_3$- bis $C_4$-Alkylgruppe,
$R^4$ für Wasserstoff oder eine $C_1$- bis $C_6$-, insbesondere $C_3$- bis $C_4$-Alkylgruppe,
p für eine ganze Zahl von 0 bis 5, insbesondere 1 bis 4, und
q für eine ganze Zahl von 1 bis 5, insbesondere 1 bis 3,

mit der Maßgabe, daß das Molverhältnis Aluminiumalkyl (3) : phenolischer Stoff (4) 1 : 1 bis 40 : 1, insbesondere 3 : 1 bis 25 : 1 beträgt.

Zu dem erfindungsgemäßen Verfahren ist im einzelnen das folgende zu bemerken:

Das Polymerisationsverfahren als solches kann — unter Beachtung der kennzeichnenden Besonderheit — in praktisch allen einschlägig üblichen technologischen Ausgestaltungen durchgeführt werden, etwa als diskontinuierliches, taktweises oder kontinuierliches Verfahren, sei es z. B. als Suspensions-Polymerisationsverfahren, Lösungs-Polymerisationsverfahren oder Trockenphasen-Polymerisationsverfahren. Die erwähnten technologischen Ausgestaltungen — mit anderen Worten: die technologischen Varianten der Polymerisation von $\alpha$-Monoolefinen nach Ziegler-Natta — sind aus der Literatur und Praxis wohlbekannt, so daß sich nähere Ausführungen zu ihnen erübrigen.

Der Vollständigkeit halber ist zu erwähnen, daß sich beim erfindungsgemäßen Verfahren auch die Molekulargewichte der Polymerisate durch die einschlägig üblichen Maßnahmen regeln lassen, z. B. mittels Reglern, wie insbesondere Wasserstoff.

Des weiteren ist noch festzuhalten, daß beim erfindungsgemäßen Verfahren die Komponenten des Katalysatorsystems in mannigfacher Weise in den Polymerisationsraum eingebracht werden können, z. B. (i) das Vermahlungsprodukt aus dem Titanhalogenid (1) und der Sauerstoffverbindung (2) als eine Komponente, das Aluminiumalkyl (3) sowie der phenolische Stoff (4) als zwei weitere Komponenten alle örtlich gemeinsam, (ii) die gleichen drei Komponenten alle örtlich getrennt voneinander, (iii) das Vermahlungsprodukt aus (1) und (2) einerseits und ein Gemisch aus (3) und (4) andererseits örtlich getrennt voneinander — was insbesondere beim Trockenphasen-Polymerisationsverfahren von Vorteil sein kann —, oder (iiii) ein Gemisch aus dem Vermahlungsprodukt aus (1) und (2) und dem phenolischen Stoff (4) einerseits und das Aluminiumalkyl (3) andererseits örtlich getrennt voneinander.

Schließlich ist darauf hinzuweisen, daß die vorteilhaften Eigenschaften des erfindungsgemäßen Verfahrens im allgemeinen besonders dann in Erscheinung treten, wenn es als Trockenphasen-Polymerisationsverfahren durchgeführt wird (für dessen Ausgestaltung typische Beispiele etwa mit den DE-AS 1 217 071, 1 520 307 und 1 520 373 gegeben sind).

Eine Maßgabe beim erfindungsgemäßen Verfahren besteht darin, daß das Titanhalogenid (1) und die Sauerstoffverbindung (2) vor ihrem Einsatz miteinander vermahlen worden sind. Auch dieses Vermahlen kann in einschlägig üblicher Weise erfolgt sein, am einfachsten etwa durch gemeinsame Behandlung der beiden Komponenten in einer Schwingmühle, insbesondere Kugelschwingmühle, über eine Zeitspanne von 2 bis 50 Stunden bei einer Temperatur von 0 bis 40°C unter einer Mahlbeschleunigung von 30 bis 80 $m \cdot sec^{-2}$ in An- oder — vorzugsweise — Abwesenheit von Verdünnungsmitteln. Das Vermahlen kann aber auch in besonders ausgestalteten Vermahlverfahren erfolgt sein, z. B. nach dem Verfahren aus der eingangs bereits zitierten DE-OS 2 658 939.

Was die stoffliche Seite des neuen Katalysatorsystems betrifft, ist im einzelnen das folgende zu sagen:

Das einzusetzende Titanhalogenid (1) kann ein bei Ziegler-Natta-Katalysatorsystemen übliches sein, z. B. ein bei der Reduktion eines Titantetrahalogenids mittels Wasserstoff, Aluminium oder aluminiumorganischen Verbindungen erhaltenes Reaktionsprodukt. Als gut geeignet haben sich erwiesen z. B. Trichloride der Formel $TiCl_3$, wie sie bei der Reduktion von Titantetrachlorid mittels Wasserstoff anfallen sowie insbesondere Kokristallisate wie sie durch Kokristallisation von $TiCl_3$ und $AlCl_3$ oder Reduktion von $TiCl_4$ mittels Aluminium bzw. Gemischen aus Aluminium und Titan erhalten

werden können. Besonders gut geeignet sind Kokristallisate der Formel $TiCl_3 \cdot {}^1/_3AlCl_3$. Die in Betracht kommenden Titanhalogenide (1) sind im Handel erhältlich, so daß sich nähere Ausführungen erübrigen.

Auch als Sauerstoffverbindungen (2) mit der angegebenen Formel kommen die einschlägig üblichen, dieser Formel gehorchenden in Betracht, wie solche, in deren Formal stehen $R^1$ für Wasserstoff oder eine Methyl-, Äthyl-, n-Propyl-, n-Butyl-, i-Propyl-, i-Butyl-, tert.-Butyl-, Methoxy-, Äthoxy-, n-Propoxy- oder n-Butoxygruppe sowie $R^2$ für eine Methyl-, Äthyl-, n-Propyl-, n-Butyl-, i-Propyl-, i-Butyl- oder tert.-Butylgruppe. Typisches Beispiel für gut geeignete Sauerstoffverbindungen (2) sind die Phenylessigsäure-, 3-Phenylpropionsäure- und 4-Phenylbuttersäureester des Methanols und Äthanols, wie insbesondere der Phenylessigsäureäthylester.

Als Aluminiumalkyle (3) mit der angegebenen Formel kommen ebenfalls die einschlägig üblichen, dieser Formel gehorchenden in Betracht; sie sind aus Literatur und Praxis so wohlbekannt, daß auf sie nicht mehr näher eingegangen zu werden braucht. Als herausragende Vertreter seien beispielsweise genannt Triäthylaluminium sowie Diäthylaluminiumchlorid.

Zu den kennzeichnenden phenolischen Stoffen (4) ist zu sagen:

Typische Beispiele für gut geeignete Stoffe mit der angegebenen Formal sind solche, in denen der Rest $R^3$ eine tert.-Butylgruppe, der Rest $R^4$ ebenfalls eine tert.-Butylgruppe oder Wasserstoff ist, und wobei die Gruppierungen $-C_pH_{2p}-$ sowie $C_qH_{2q+1}$ geradkettig sind.

Namentliche Beispiele für gut geeignete Stoffe mit der angegebenen Formel sind die Ester der $\beta$-(4'-Oxy-3',5'-di-tert.-butylphenyl)-propionsäure mit Methanol, Äthanol, n-Propanol und n-Butanol.

Das erfindungsgemäße Verfahren erlaubt es, Homo- und Copolymerisate von $C_2$- bis $C_6$-Monoolefinen in vorteilhafter Weise herzustellen, wobei besonders geeignete zu polymerisierende $\alpha$-Monoolefine Propylen, Buten-1 und 4-Methylpenten-1, sowie — zur Copolymerisation — Äthylen sind.

## Beispiel 1

Ausgangsstoffe des Katalysatorsystems sind

(1) ein Titanhalogenid der Formel $TiCl_3 \cdot 0{,}33\ AlCl_3$,
(2) Phenylessigsäureäthylester als Sauerstoffverbindung,
(3) Diäthylaminiumchlorid als Aluminiumalkyl, und
(4) der in der unten stehenden Tabelle angegebene phenolische Stoff.

Das Titanhalogenid (1) und die Sauerstoffverbindung (2) sind im Molverhältnis 3 : 1 vor ihrem Einsatz in einer Kugelschwingmühle über eine Zeitspanne von 50 Stunden bei einer Temperatur von 20° C unter einer Mahlbeschleunigung von 50 m · $sec^{-2}$ in Abwesenheit von Verdünnungsmitteln miteinander vermahlen worden.

Zur Polymerisation werden unter Ausschluß von Luft und Feuchtigkeit in einem Rührgefäß 1000 Gew.-Teile n-Heptan vorgelegt, worauf man 2,3 Gew.-Teile der Katalysatorkomponente (3) zugibt sowie soviel des Vermahlungsproduktes aus den Komponenten (1)/(2), daß das Molverhältnis Titanhalogenid (1) : Aluminiumalkyl (3) 1 : 2,5 beträgt und soviel der Katalysatorkomponente (4), daß das Molverhältnis Aluminiumalkyl (3) : phenolischem Stoff (4) den in der Tabelle angegebenen Wert hat.

Die eigentliche Polymerisation wird mit Propylen bei einer Temperatur von 60° C unter einem Druck des Monomeren von 1 bar über 3 Stunden unter Rühren durchgeführt, worauf das gebildete Polypropylen in üblicher Weise isoliert wird; seine Menge und sein in siedendem n-Heptan unlöslicher Anteil sind in der Tabelle angegeben.

## Vergleichsversuch A

Es wird verfahren in Identität mit Beispiel 1, mit der einzigen Ausnahme, daß ohne Zusatz eines phenolischen Stoffes gearbeitet wird.

Das Ergebnis findet sich ebenfalls in der Tabelle.

## Beispiel 2

Die Ausgangsstoffe (1), (2) und (3) des Katalysatorsystems sind die gleichen wie in Beispiel 1; der Ausgangsstoff (4) ist in der Tabelle angegeben.

Zur Polymerisation werden unter Ausschluß von Luft und Feuchtigkeit in ein druckfestes Rührgefäß eingebracht 10 000 Gew.-Teile flüssiges Propylen, 18 Nl Wasserstoff (als Molekulargewichtsregler), 1,68 Gew.-Teile der Katalysatorkomponente (3), soviel des Vermahlungsproduktes aus den

Komponenten (1)/(2), daß das Molverhältnis Titanhalogenid (1) : Aluminiumalkyl (3) 1 : 7 beträgt und soviel der Katalysatorkomponente (4), daß das Molverhältnis Aluminiumalkyl (3) : phenolischer Stoff (4) den in der Tabelle angegebenen Wert hat.

Die eigentliche Polymerisation wird bei einer Temperatur von 80°C unter einem Druck von 38 bar über 2 Stunden unter Rühren durchgeführt, worauf das gebildete Polypropylen in üblicher Weise isoliert wird; seine Menge und sein in siedendem n-Heptan unlöslicher Anteil sind in der Tabelle angegeben.

Vergleichsversuch B

Es wird verfahren in Identität mit Beispiel 2, mit der einzigen Ausnahme, daß ohne Zusatz eines phenolischen Stoffes gearbeitet wird.

Das Ergebnis findet sich wiederum in der Tabelle.

In der Tabelle bedeutet:

MBPP = Methyl-β-(4'-oxy-3',5'-di-tert.-butylphenyl)-propionat.

Tabelle

| Beispiel bzw. | phenolischer Stoff | | Polypropylen | |
|---|---|---|---|---|
| Vgl.-vers. | Art | Molverhältnis (3) : (4) | Gew.-Teile | $n\text{-}C_7H_{16}$ unlöslich |
| 1 | MBPP | 5 : 1 | 220 | 99,2% |
| A | – | – | 188 | 98,1% |
| 2 | MBPP | 21 : 1 | 3700 | 97,8% |
| B | – | – | 3090 | 94,1% |

**Patentanspruch**

Verfahren zum Herstellen von Homo- und Copolymerisaten von $C_2$- bis $C_6$-α-Monoolefinen bei Temperaturen von 20 bis 160°C und Drücken von 1 bis 100 bar mittels eines Ziegler-Natta-Katalysatorsystems aus

(1) einem Titanhalogenid der Formel

$TiCl_3 \cdot mAlCl_3$

worin m steht für eine Zahl von 0 bis 0,5,

(2) einer Sauerstoffverbindung der Formel

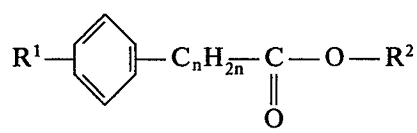

worin stehen

$R^1$ für Wasserstoff, eine $C_1$- bis $C_4$-Alkylgruppe oder eine $C_1$- bis $C_4$-Alkoxygruppe,

$R^2$ für eine $C_1$- bis $C_4$-Alkylgruppe, und

n für eine ganze Zahl von 0 bis 3,

und

(3) einem Aluminiumalkyl der Formel

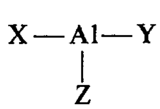

worin stehen

X sowie
Y für eine jeweils nicht mehr als 8 Kohlenstoffatome aufweisende Alkylgruppe,
Z für Chlor oder eine nicht mehr als 8 Kohlenstoffatome aufweisende Alkylgruppe,

mit den Maßgaben, daß (I) das Molverhältnis Titanhalogenid (1) : Sauerstoffverbindung (2) im Bereich von 1 : 1 bis 20 : 1, liegt, (II) das Molverhältnis Titanhalogenid (1) : Aluminiumalkyl (3) 1 : 1 bis 1 : 20 beträgt, sowie (III) das Titanhalogenid (1) und die Sauerstoffverbindung (2) vor ihrem Einsatz miteinander vermahlen worden sind, dadurch gekennzeichnet, daß man ein Katalysatorsystem einsetzt, das als eine weitere Komponente enthält

(4) einen phenolischen Stoff der Formel

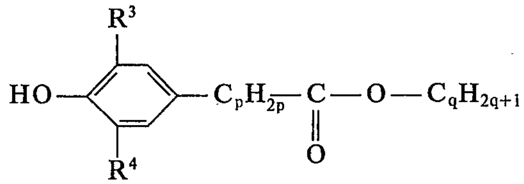

worin stehen
$R^3$ für eine $C_1$- bis $C_6$-Alkylgruppe,
$R^4$ für Wasserstoff oder eine $C_1$- bis $C_6$-Alkylgruppe,
p für eine ganze Zahl von 0 bis 5, und
q für eine ganze Zahl von 1 bis 5,

mit der Maßgabe, daß das Molverhältnis Aluminiumalkyl (3) : phenolischer Stoff (4) 1 : 1 bis 40 : 1 beträgt.

**Claim**

A process for the preparation of homopolymers and copolymers of $C_2$—$C_6$-$\alpha$-monoolefins at from 20 to 160° C, under a pressure of from 1 to 100 bar, by means of a Ziegler-Natta catalyst system comprising

(1) a titanium halide of the formula

$TiCl_3 \cdot mAlCl_3$

where m is from 0 to 0.5,
(2) an oxygen compound of the formula

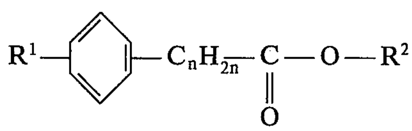

where
$R^1$ is hydrogen, $C_1$—$C_4$-alkyl or $C_1$—$C_4$-alkoxy,
$R^2$ is $C_1$—$C_4$-alkyl, and
n is an integer from 0 to 3,
and
(3) an aluminium-alkyl of the formula

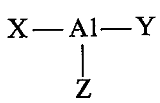

where
X and Y are each alkyl of not more than 8 carbon atoms and
Z is chlorine or alkyl of not more than 8 carbon atoms,

with the proviso that (I) the molar ratio of titanium halide (1) to oxygen compound (2) is from 1 : 1 to 20 : 1, (II) the molar ratio of titanium halide (1) to aluminiumalkyl (3) is from 1 : 1 to 1 : 20, and (III) the titanium halide (1) and the oxygen compound (2) have been milled together before use, in which process the catalyst system employed contains, as a further component,

(4) a phenolic compound of the formula

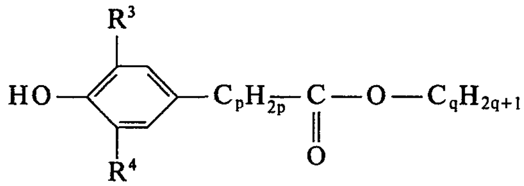

where
$R^3$ is $C_1-C_6$-alkyl,
$R^4$ is hydrogen or $C_1-C_6$-alkyl,
p is an integer from 0 to 5, and
q is an integer from 1 to 5,

with the proviso that the molar ratio of aluminiumalkyl (3) to phenolic compound (4) is from 1 : 1 to 40 : 1.

## Revendication

Procédé pour l'obtention de produits d'homo- et de copolymérisation d'α-mono-oléfines en $C_2$ à $C_6$, à des températures de 20 à 160°C et sous des pressions de 1 à 100 bars, au moyen d'un système catalyseur de Ziegler-Natta composé

(1) d'un halogénure de titane de formule

$TiCl_3 \cdot mAlCl_3$

dans laquelle m est un nombre de 0 à 0,5,
(2) d'un composé oxygéné de formule

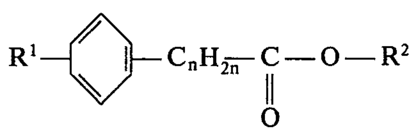

dans lequel:
$R^1$ Hydrogène, groupe alcoyle en $C_1$ à $C_4$ ou groupe alcoxy en $C_1$ à $C_4$,
$R^2$ Groupe alcoyle en $C_1$ à $C_4$ et
n Nombre entier de 0 à 3,
et
(3) d'un aluminium-alcoyle de formule

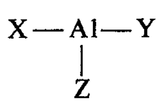

dans lequel:
X et Y Groupe alcoyle ne comportant, pour chacun d'entre eux, pas plus de 8 atomes de carbone,
Z Chlore ou groupe alcoyle ne comportant pas plus de 8 atomes de carbone,

avec ces conditions que: (I) le rapport molaire de l'halogénure de titane (1) au composé oxygéné (2) se situe dans la gamme de 1 : 1 à 20 : 1, (II) le rapport molaire de l'halogénure de titane (1) à l'aluminium-alcoyle (3) soit compris entre 1 : 1 et 1 : 20 et (III) l'halogénure de titane (1) et le composé oxygéné (2) aient été broyés ensemble très finement avant leur utilisation, caractérisé en ce qu'on utilise un système catalyseur qui contient, comme constituant supplémentaire,

(4) une substance phénolique de formule

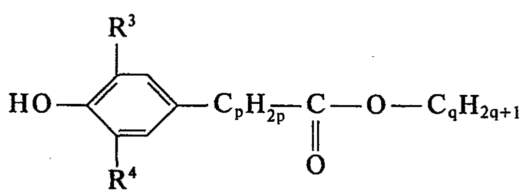

dans laquelle:

$R^3$ Groupe alcoyle en $C_1$ à $C_6$,
$R^4$ Hydrogène ou groupe alcoyle en $C_1$ à $C_6$,
p Nombre entier de 0 à 5 et
q Nombre entier de 1 à 5,

avec cette condition que le rapport molaire de l'aluminium-alcoyle (3) à la substance phénolique (4) soit compris entre 1 : 1 et 40 : 1.